# FASCICULE DE BREVET EUROPEEN

(11) **EP 0 524 067 B1**
(45) Date de publication et mention de la délivrance du brevet: **23.04.1997**
(21) Numéro de dépôt: 92401987.0
(22) Date de dépôt: 09.07.1992
(51) Int. Cl.: G02F 1/1335, G02F 1/136

(54) **Structure d'écran à cristal liquide, à matrice active et à haute définition**
Hochauflösender Flüssigkristallbildschirm mit aktiver Matrix
High definition active matrix liquid crystal screen

(30) Priorité: 11.07.1991 FR 9108752
(43) Date de publication de la demande: 20.01.1993
(73) Titulaire: FRANCE TELECOM, 75015 Paris (FR)
(72) Inventeur: Morin, François, F-22300 Lannion (FR); Chouan, Yannick, F-22700 Louannec (FR); Vinouze, Bruno, F-22710 Port Blanc (FR)
(74) Mandataire: Lhoste, Catherine

(56) Documents cités:
- EP-A- 0 136 509
- EP-A- 0 271 313
- FR-A- 2 638 880
- US-A- 4 775 549
- SID 87 INTERNATIONAL SYMPOSIUM, DIGEST OF TECHNICAL PAPERS 1987, NEW YORK, US pages 379 - 382 W.J.LATHAM 'A New Class of Color Filters for Liquid-Crystal displays'
- APPLIED PHYSICS LETTERS. vol. 57, no. 22, 26 Novembre 1990, NEW YORK US pages 2288 - 2290 B.SINGH ET AL. 'Use of black diamond-like carbon films as a contrast enhancement layer for liquid-crystal displays'
- PATENT ABSTRACTS OF JAPAN vol. 11, no. 313 (P-626)13 Octobre 1987

## Description

La présente invention a pour objet une nouvelle structure d'écran à cristal liquide (LCD) et à matrice active à base de transistors en couches minces (TFT) et de condensateurs, spécialement adaptée à la réalisation d'écrans plats d'affichage de haute résolution.

Ces écrans plats peuvent être utilisés comme écran de télévision de grande dimension, en couleur, comme écran de terminal d'ordinateur en couleur, à vision directe.

Dans ce type d'écran, une mémoire électronique formée de points mémoires répartis sur toute la surface de l'écran stocke le signal vidéo pendant toute la durée de l'image. Le cristal liquide en contact avec chaque point mémoire est excité pendant toute la durée d'une image. Chaque point mémoire est constitué d'un ou deux TFT et d'un ou deux condensateurs ; le cristal liquide constitue le diélectrique de l'un d'entre eux.

De plus, ces structures d'écran se composent de deux plaques de verre maintenues écartées l'une de l'autre, comportant chacune des motifs précis et entre lesquelles est interposé le cristal liquide.

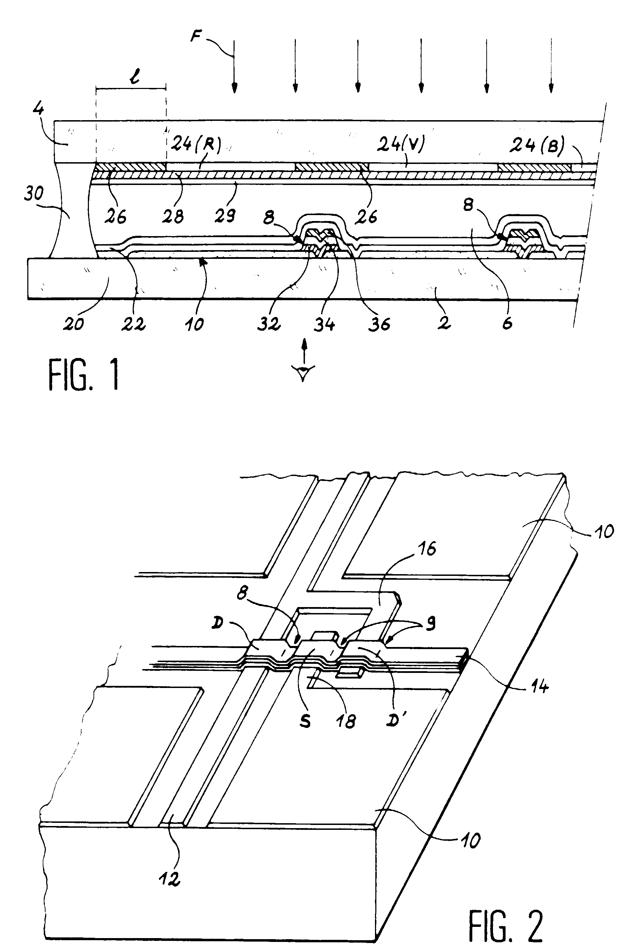

Sur les figures 1 et 2 annexées, on a représenté schématiquement une structure d'écran à matrice active et à affichage en couleur selon l'art antérieur. La figure 1 est une vue en coupe longitudinale et la figure 2 est une vue en perspective d'une partie de la plaque inférieure de l'écran, dépourvue de la couche de passivation et d'orientation du cristal liquide.

Sur ces figures, les références 2 et 4 indiquent respectivement les plaques supports transparentes inférieure et supérieure de l'écran et la référence 6 indique le cristal liquide.

Selon l'art antérieur, la plaque inférieure 2 (figure 2) supporte sur sa face interne les transistors en couches minces 8 et 9 de chaque point mémoire ; les électrodes transparentes 10 de ces points mémoires constituant l'armature inférieure des condensateurs ; les colonnes 12 et les lignes 14 d'électrodes de commande des transistors 8 et 9.

Chaque colonne d'adressage 12 est pourvue d'une crosse 16 et chaque armature 10 est pourvue d'un doigt 18. Les croisements de la ligne 14 avec la colonne 2 et la crosse 16 définissent les drains D et D' des transistors 8 et 9 et le croisement de la ligne 14 avec le doigt 18 définit la source de ces transistors. Les parties de la ligne 14 situées respectivement entre la colonne 12 et le doigt 18 et la crosse 16 et le doigt 18 constitue les grilles des transistors 8 et 9.

Cet ensemble est recouvert d'une couche de passivation 20 en nitrure de silicium et éventuellement d'une couche 22 d'orientation du cristal liquide (figure 1).

La plaque de verre supérieure 4 comporte sur sa face interne des filtres colorés 24 séparés par un masque optique 26 (connu sous le nom de "Black matrix" en terminologie anglo-saxonne ou sous le terme de "grille noire"). Ces filtres sont alternativement rouges R, verts V, bleus B.

Ces filtres colorés et le masque noir 26 sont recouverts d'une couche conductrice 28 transparente, jouant le rôle de contre-électrode et en particulier d'électrode supérieure pour les condensateurs.

Les électrodes 10 et 28 sont généralement réalisées en oxyde d'indium et d'étain (ITO).

De plus, la contre-électrode 28 peut être recouverte d'une couche 29 d'alignement des molécules du cristal liquide.

Une structure d'écran telle que représentée sur les figures 1 et 2 est notamment décrite dans le document SID 84 Digest, p. 308-311 de Y.Ugai et al., intitulé "Diagonal Color LCD addressed by a-Si TFTs".

A l'assemblage de l'écran, les deux plaques de verre 2 et 4 doivent être positionnées l'une en face de l'autre, de telle sorte que les électrodes transparentes 10, définissant les points images (ou "pixels"), soient parfaitement superposées aux filtres colorés 24. Après ce positionnement, on scelle les deux plaques 2 et 4 à leur périphérie à l'aide d'un joint de colle 30 et on remplit la cellule d'affichage de cristal liquide.

Chacune des deux plaques 2 et 4 de l'écran comporte des motifs très précis. En effet, le pas des "pixels", et donc des filtres colorés est typiquement de 0,2 mm. Par ailleurs, chaque point image est défini électriquement par l'électrode 10 de la plaque 2 supportant les TFT, mais optiquement par le filtre coloré 24 entouré de sa grille noire (Black Matrix) réalisé sous la contre-électrode 28.

Pour pouvoir diminuer au maximum la largeur l de la grille noire entre deux filtres consécutifs et donc augmenter autant que possible la transparence de l'écran, on recherche une précision de superposition des deux plaques de ±3µm. Or, les deux plaques de verre ont connu une histoire thermique différente au cours de leur fabrication.

Le verre subit, on le sait, une compaction plus ou moins aléatoire causant des variations géométriques qui peuvent atteindre plusieurs micromètres, voire plus de 10µm, selon la nature du verre et les températures (notamment de dépôt de couches) mises en jeu.

Dans ce cas, la superposition précise des deux plaques de verre, ayant des motifs très précis, devient problématique pour les grandes dimensions.

Ce problème de positionnement précis des deux plaques de verre se pose dans toutes les structures d'écran dans lesquelles les filtres et les points mémoires sont réalisés respectivement sur les deux plaques supports et en particulier dans la structure décrite dans le document EP-A-0 179 915.

Par ailleurs, lorsqu'on utilise le procédé de fabrication d'un écran d'affichage "à deux niveaux de masquage", tel que décrit dans le document FR-A-2 533 072, les transistors 8 et 9 ainsi que les lignes d'adressage 14 sont constitués d'un empilement d'une couche de silicium amorphe hydrogéné 32, d'une couche de nitrure de silicium 34 et d'une couche d'aluminium 36 photogravées.

Dans ce type d'écran à "grilles dessus", on voit que la face inférieure du semi-conducteur 32 est directement au contact du verre et n'est pas protégée de la lumière.

Bien que l'éclairage soit généralement fait par l'arrière ou face supérieure, comme l'indiquent les flèches F de la figure 1, le "ventre" des TFT (ou faces inférieures en contact avec le substrat 2) se trouve exposé à la lumière ambiante d'observation. Aussi, lorsque cette lumière est intense, un photocourant est engendré dans le semi-conducteur entraînant des courants de fuite dans les transistors pouvant limiter les performances de l'écran et en particulier diminuer son contraste.

Pour remédier à cet inconvénient, on a envisagé la réalisation d'un masque optique en polyimide noir sous le "ventre" des transistors comme décrit dans le document FR-A-2 638 880. Toutefois, dans ce type d'écran, le problème de positionnement précis des filtres colorés et des électrodes 10 de "pixels" n'est pas non plus résolu.

Ce problème de positionnement des deux substrats existe aussi dans les écrans de plus petite taille utilisés pour la projection.

Aussi, l'invention a pour objet une nouvelle structure d'écran en couleur à cristal liquide et à matrice active permettant de remédier aux différents inconvénients mentionnés ci-dessus. En particulier, cette structure d'écran permet de rendre l'opération d'assemblage des deux substrats transparents, équipés chacun de leurs motifs, non critique et très rapide.

L'invention s'applique donc aux écrans de petite ou grande dimension de haute définition, c'est-à-dire des écrans ayant des pas de points images et de filtres colorés de 0,2 mm et même moins.

De plus, les performances électriques de cet écran sont améliorées par rapport à celles de l'art antérieur.

Dans le cas des écrans en couleur de haute définition et de grande dimension, l'invention a pour objet une structure d'écran à cristal liquide et à matrice active, comportant un premier et un second substrats transparents maintenus écartés l'un de l'autre, entre lesquels est interposé un film de cristal liquide, le premier substrat supportant essentiellement :
- des filtres colorés résistant à de hautes températures et séparés par des masques optiques ;
- une première couche transparente de passivation déposée sur toute la surface occupée par les filtres et les masques optiques ;
- des transistors en couches minces, formés sur la première couche de passivation, en regard des masques optiques de façon être protégés de la lumière ambiante ;
- des premières armatures transparentes de condensateurs, formées sur la première couche de passivation en regard des filtres colorés, chaque première armature étant connectée à un transistor en couches minces ;
- des lignes et des colonnes d'électrodes pour commander ces transistors ;
- une seconde couche transparente de passivation recouvrant l'ensemble des transistors, des premières armatures, des lignes et des colonnes ;
et le second substrat comportant essentiellement la seconde armature transparente des condensateurs, ces secondes armatures faisant face aux premières armatures des condensateurs.

Par "filtres résistant à haute température", il faut comprendre des filtres résistant à au moins 180°C.

En général, les lignes et les colonnes de commande sont aussi disposées en regard des masques optiques ou "grille noire".

Compte tenu des niveaux de flux lumineux très élevés utilisés dans cette application, le masque optique doit être aussi réflectif que possible afin d'éviter tout échauffement des TFT. Il est donc réalisé avantageusement en métal brillant, le chrome ou l'aluminium ( 0,2µm) par exemple, isolé du TFT par une couche diélectrique épaisse.

Le fait d'introduire un "masque optique" métallique sous les transistors et éventuellement sous les lignes et les colonnes, conduit à une augmentation de la capacité des lignes et des colonnes. Pour les grands écrans, cela constitue un handicap car alors le temps de propagation des signaux de commande dans le réseau d'accès aux TFT devient important. C'est la raison pour laquelle, dans les grands écrans, la "grille noire" est avantageusement en matériau isolant électriquement, par exemple en polymère noir.

A l'inverse, dans les petits écrans, comme ceux utilisés pour la projection, qui sont typiquement de la taille d'une diapositive 24x36 ou un peu plus grands, ce phénomène de temps d'accès est négligeable et la solution proposée est satisfaisante. On note de plus que, dans ce cas, le petit recouvrement éventuel du "masque optique" et du pixel (typiquement 1 à 2µm à la périphérie du pixel) constitue une capacité de stockage dont la présence améliore le comportement de l'écran à haute température.

Conformément à l'invention, tous les éléments précis de l'écran, tels que les points images, les transistors en couches minces, les filtres colorés et les masques optiques ou "grille noire" (dans le sens de grillage) sont réalisés sur le même substrat transparent.

En conséquence, le deuxième substrat de l'écran n'a plus comme fonction que d'être équipé d'une couche conductrice jouant le rôle de contre-électrode et d'être transparent.

De façon avantageuse, cette contre-électrode est constituée d'une plaque continue transparente recouvrant la majeure partie de la face interne du substrat.

Ainsi, l'assemblage des deux substrats de l'écran peut être très rapide, le positionnement précis de ces deux substrats l'un par rapport à l'autre ne se posant plus.

Par ailleurs, le positionnement précis de tous les éléments de l'écran sur le même substrat ne pose pas de problème et l'alignement précis entre les filtres colorés et les premières armatures de condensateurs pour les écrans en couleur est meilleur que les ±3µm de l'art antérieur. Ainsi, le taux de transparence de l'écran est plus élevé que dans les structures de l'art antérieur.

En effet, la superposition des filtres colorés et des premières armatures de condensateurs peut être réalisée avec un aligneur de masque identique à celui utilisé pour la fabrication des transistors en couches minces.

Par ailleurs, les transistors en couches minces étant réalisés sur des masques optiques ou grille noire, ceux-ci sont totalement protégés de la lumière ambiante, ce qui, dans le cas de la réalisation de ces transistors dans du silicium amorphe hydrogéné, entraîne une réduction de courant de fuite dans ces transistors améliorant ainsi les performances de l'écran.

De façon avantageuse, les filtres colorés se présentent sous forme de pavés définissant avec les masques optiques un quadrillage uniforme, sans relief, sur lesquels les lignes et les colonnes de la matrice active ainsi que les transistors sont réalisés de façon optimum.

Il est toutefois possible, si la technique de réalisation des filtres colorés conduit à une surface complètement plane, d'utiliser des filtres colorés sous forme de bandes parallèles.

Les masques optiques peuvent être réalisés en métal pour les petits écrans ou en polymère pour les grands, par exemple en polyimide noir.

Lorsque les masques optiques sont réalisés en polymère, celui-ci doit pouvoir résister à des températures supérieure à 180°C.

De plus, les transistors sont en particulier du type à "grille dessus".

D'autres caractéristiques et avantages de l'invention ressortiront mieux de la description qui va suivre, donnée à titre illustratif et non limitatif.

La description se réfère aux dessins annexés dans lesquels :
- les figures 1 et 2, déjà décrites, représentent schématiquement en coupe et en vue de dessus partielle une structure d'écran en couleur conforme à l'art antérieur,
- les figures 3 et 4 représentent schématiquement une structure d'écran en couleur conforme à l'invention : la figure 3 est une vue en coupe longitudinale et la figure 4 est une vue partielle en perspective de la plaque inférieure de l'écran,
- les figures 5 et 6 représentent schématiquement une structure d'écran monochrome non conforme à l'invention : la figure 5 est une vue en coupe longitudinale et la figure 6 est une vue partielle en perspective de la plaque inférieure de l'écran, et
- la figure 7 est un schéma électrique d'un point image de la structure d'écran de la figure 5.

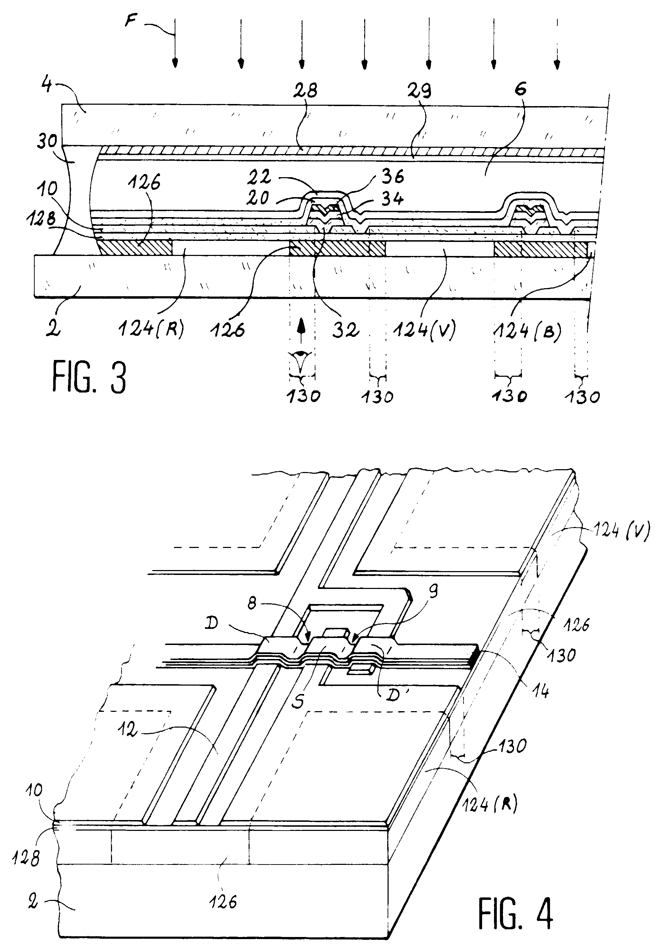

Sur les figures 3 et 4, les parties de l'écran identiques à celles de l'art antérieur porteront les mêmes références.

L'écran conforme à l'invention comporte, comme dans l'art antérieur, deux plaques de verre inférieure et supérieure 2 et 4, disposées en regard, renfermant un cristal liquide 6. Un joint d'étanchéité 30 périphérique assure le scellement des deux plaques 2 et 4 par leur bord.

Conformément à l'invention, la plaque avant ou inférieure 2 supporte des filtres colorés 124 séparés les uns des autres par des masques absorbants ou grille noire 126. Les filtres rouges R, verts V et bleus B sont disposés en alternance. Ils se présentent sous forme de pavés et l'espace entre ces pavés est comblé par la grille noire 126. Ces pavés présentent une surface au plus égale à celle des électrodes 10 des points mémoires.

Ces filtres colorés et cette grille noire ont une épaisseur de 1,2µm. Ils sont réalisés en polyimide coloré respectivement en rouge, vert, bleu et noir, recuits dans une étuve à 220°C. Ces filtres colorés peuvent être réalisés comme décrit dans le document SID 87 Digest, p.379-382 de W.J. Latham et al., "A new class of color filters for liquid-crystal displays".

Ces filtres et cette grille noire peuvent aussi être réalisés par sublimation d'une encre colorée à l'aide de moyens thermo-électroniques comme décrit dans l'article "High quality organic pigment color filter for color liquid-crystal display" de T. Ueno et al., Japan Display 86, p.320-322.

Ces deux techniques de fabrication de filtres colorés sont compatibles avec le procédé de fabrication des transistors en couches minces à "deux niveaux de masquage". En particulier, ces filtres présentent un état de surface excellent et sont résistants à haute température (typiquement à des températures de 200 à 250°C).

En outre, la technique de fabrication de ces filtres est compatible avec celle des opérations de photolithographie du procédé à "deux niveaux de masquage".

Pour améliorer la compatibilité de ces filtres colorés 124 avec la fabrication des transistors en couches minces 8 et 9, il est nécessaire de recouvrir ces filtres 124 et la grille noire 126 d'une couche de passivation 128 transparente. Cette couche de passivation peut être réalisée en nitrure de silicium ou de préférence en carbone amorphe hydrogéné, déposée par dépôt chimique en phase vapeur.

En particulier, la couche de passivation est une couche de carbone amorphe hydrogéné de 0,1µm d'épaisseur, déposée à température ambiante (25°C) par CVD assisté par plasma (PECVD), le gaz actif étant du CH₄. Cette couche de passivation recouvre la surface totale des filtres et de la grille noire.

Sur cette couche de passivation 128, on trouve les transistors en couches minces 8 et 9, les colonnes d'adressage 12, les lignes d'adressage 14 ainsi que les électrodes 10 des points mémoires. Ces éléments sont réalisés selon le procédé connu de "deux niveaux de masquage" tel que décrit dans le document FR-A-2 503 072.

En particulier, les contacts de source S et de drain D, D' ainsi que les colonnes 12 de commande et les électrodes d'images 10 sont définis dans une même couche d'ITO de 200 nm d'épaisseur et de 10 ohms/carré de résistivité, déposée par pulvérisation magnétron à température ambiante.

Par ailleurs, les transistors 8 et 9 et les lignes d'adressage 14 sont définis par photolithographie d'un empilement d'une couche 32 de silicium amorphe hydrogéné, d'une couche 34 de nitrure de silicium et d'une couche 36 d'aluminium. Ces couches ont une épaisseur respective de 15 nm, 300 nm et 200 nm. Les couches 32 et 34 sont déposées par PECVD à 180°C et la couche d'aluminium est déposée par pulvérisation magnétron à température ambiante.

La couche d'aluminium gravée définie entre autres les grilles de commande des transistors.

Comme représenté sur la figure 3, l'ensemble de ces éléments actifs est recouvert d'une seconde couche de passivation 20, réalisée comme dans l'art antérieur en nitrure de silicium, de 50 nm d'épaisseur et déposée par PECVD à 150°C.

On trouve alors la couche d'orientation 22 du cristal liquide 6. Cette couche 22 est réalisée en polyimide transparent de 0,1µm d'épaisseur, déposé à la tournette, recuit à 180°C puis brossé.

Conformément à l'invention, le substrat de verre 4 supérieur ou arrière est directement recouvert de la contre-électrode 28 se présentant sous la forme d'une plaque continue transparente d'ITO de 200 nm d'épaisseur recouvrant toute la surface interne de la plaque 4 destinée à l'affichage. Cette contre-électrode 28 est déposée par pulvérisation magnétron, directement sur la plaque 4.

Une couche 29 d'orientation du cristal liquide identique à la couche 22 est prévue sur la face interne de la contre-électrode 28.

Il est possible de remplacer la plaque de verre supérieure 4 par une plaque semi-rigide en matière plastique compatible avec le procédé de dépôt de la contre-électrode et compatible avec le cristal liquide 6 utilisé.

On pourrait aussi envisager de remplacer la contre-électrode d'ITO par une contre-électrode en polymère souple rigide et transparent, tel qu'un polycarbonate ou un polyamide, recouvert d'une couche d'ITO.

L'assemblage de la structure d'écran selon l'invention est beaucoup plus simple et plus rapide que celui de l'art antérieur, permettant ainsi une production d'écrans plats de grande dimension et de haute résolution à une cadence plus élevée et à un coût plus faible que ceux de l'art antérieur.

Conformément à l'invention, les transistors en couches minces 8 t 9 sont fabriqués en regard de la grille noire 126 ainsi que les lignes 14 et les colonnes 12 de la matrice active alors que les électrodes 10 de condensateur sont réalisées au-dessus des filtres colorés 124.

La superposition de l'armature 10 des condensateurs et des filtres 124 est réalisée avec un analigneur de masque identique à celui utilisé pour la fabrication de la matrice de transistors en couches minces. On obtient ainsi une précision d'alignement meilleure que les ± 3µm de l'art antérieur et typiquement de ±1µm.

En outre, la grille noire 126 sous les "ventres" des transistors en couches minces joue le rôle de masque optique, empêchant ainsi la lumière ambiante de perturber le fonctionnement de ces transistors.

Ce masque optique a en outre l'avantage d'être isolant électriquement.

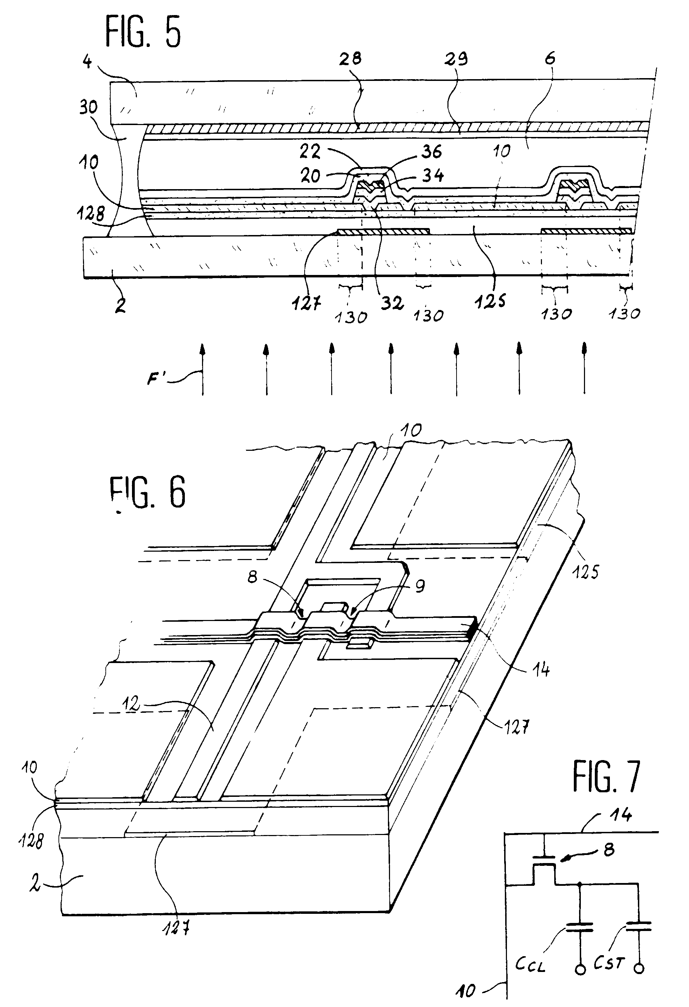

Dans le cas des petits écrans pour les systèmes de projection, on voit sur les figures 5 et 6 non conforme à l'invention que les filtres colorés et la "grille noire" sont remplacés par un masque optique métallique 127 conducteur, par exemple en chrome ou en aluminium, en forme de grille, recouvert d'une couche isolante 125, par exemple en silice ou en polyimide non coloré, de 0,4µm d'épaisseur. La structure de l'écran est par ailleurs identique à celle des grands écrans définie aux figures 3 et 4.

Dans ce type d'écran, l'éclairage se fait par l'avant ou face inférieure, comme l'indiquent les flèches F'.

Selon l'invention, les masques optiques 126 et 127 débordent sous les électrodes 10 des points images et de leur recouvrement 130. Dans le cas de masque métallique (conducteur d'électricité), ces recouvrements définissent des condensateurs C_{ST}.

D'un point de vue électrique, ce condensateur C_{ST} vient en parallèle du condensateur de cristal liquide C_{CL} comme le montre la figure 7.

Cette capacité de stockage C_{ST} va favoriser le maintien de la charge électrique aux bornes du cristal liquide dans l'état fermé du transistor, du fait que cette capacité est sans perte.

Dans l'application de la projection où le transistor va être très illuminé, cette capacité de stockage intégrée est un gros avantage améliorant le contraste de l'écran, notamment à haute température.

Par ailleurs, l'emploi d'un masque opaque 127 hautement réflectif permet d'éviter l'échauffement des transistors.

## Revendications

1. Structure d'écran en couleur à cristal liquide et à matrice active, comportant un premier et un second substrats transparents (2, 4) maintenus écartés l'un de l'autre, entre lesquels est interposé un film de cristal liquide (6), le premier substrat (2) supportant essentiellement :
- des filtres colorés (124) résistant à des températures au moins égales à 180°C et séparés par des masques optiques (126) ;
- une première couche transparente (128) de passivation déposée sur toute la surface occupée par les filtres et les masques optiques ;
- des transistors (8, 9) en couches minces, formés sur la première couche de passivation, en regard des masques optiques de façon à être protégés de la lumière ambiante ;
- des premières armatures (10) transparentes de condensateurs, formées sur la première couche de passivation en regard des filtres colorés, chaque première armature étant connectée à un transistor en couches minces ;
- des lignes (14) et des colonnes (12) d'électrodes pour commander ces transistors ;
- une seconde couche transparente de passivation (20) recouvrant l'ensemble des transistors, des premières armatures, des lignes et des colonnes ;
et le second substrat (4) comportant essentiellement la seconde armature (28) transparente des condensateurs, ces secondes armatures faisant face aux premières armatures des condensateurs.

2. Structure selon la revendication 1, dans laquelle le second substrat (4) comporte une plaque conductrice continue (28) servant de secondes armatures.

3. Structure selon la revendication 1 ou 2, dans laquelle les transistors sont du type à "grille dessus".

4. Structure selon l'une quelconque des revendications 1 à 3, dans laquelle que les filtres colorés et les masques optiques sont formés dans une couche de polyimide réticulé contenant des pigments.

5. Structure selon l'une quelconque des revendications 1 à 4, dans laquelle que la première couche de passivation est une couche de carbone amorphe hydrogéné déposée chimiquement en phase vapeur (CVD).

6. Structure selon l'une quelconque des revendications 1 à 5, dans laquelle les filtres ont la forme de pavés, chaque filtre présentant une surface au plus égale à celle de chaque armature.

## Patentansprüche

1. Flüssigkristall-Farbbildschirm-Struktur mit aktiver Matrix, zwei transparente, voneinander beabstandete Substrate umfassend, ein erstes (2) und ein zweites (4), zwischen denen ein Flüssigkristallfilm (6) vorgesehen ist, wobei das erste Substrat (2) im wesentlichen trägt:
- Farben- bzw. Lichtfilter (124), die Temperaturen von wenigstens gleich 180°C aushalten und durch Lichtmasken (126) getrennt werden;
- eine erste transparente Passivierungsschicht (128), abgeschieden auf der gesamten durch die Filter und die Lichtmasken eingenommenen Oberfläche;
- Dünnschichtentransistoren (8, 9), gebildet auf der ersten Passivierungsschicht, den Lichtmasken gegenüberstehend, so daß sie vor dem Umgebungslicht geschützt sind;
- erste transparente Kondensatorbelegungen (10), gebildet auf der ersten Passivierungsschicht, den Farbenfiltern gegenüberstehend, wobei jede erste Belegung mit einem Dünnschichtentransisitor verbunden ist;
- Elektrodenzeilen (14) und -spalten (12) zum Steuern dieser Transistoren;
- eine zweite transparente Passivierungsschicht (20), die Gesamtheit der Transisitoren, ersten Belegungen sowie Zeilen und Spalten überdeckend;
und das zweite Substrat (4) im wesentlichen die zweite transparente Belegung (28) der Kondenstoren umfaßt, wobei diese zweiten Belegungen den ersten Belegungen der Kondensatoren gegenüberstehen.

2. Struktur nach Anspruch 1, bei der das zweite Substrat (4) eine durchgehende Leiterplatte (28) umfaßt, die als zweite Belegung dient.

3. Struktur nach Anspruch 1 oder 2, bei der die Transistoren vom Typ "Gate oben bzw. drauf" (type à "grille dessus") sind.

4. Struktur nach einem der Ansprüche 1 bis 3, bei der die Farbenfilter und die Lichtmasken in einer Schicht aus vernetztem Polyimid gebildet werden.

5. Struktur nach einem der Ansprüche 1 bis 4, bei der die erste Passivierungsschicht eine Schicht aus hydrogenem amorphem, chemisch in der Gasphase (CVD) abgeschiedenem Kohlenstoff ist.

6. Struktur nach einem der Ansprüche 1 bis 5, bei dem die Filter eine parallelflache Form haben, wobei jeder Filter eine Fläche wenigstens gleich der von jeder Belegung aufweist.

## Claims

1. Active matrix, liquid crystal screen structure having a first and a second transparent substrates (2, 4) kept spaced from one another and between which is interposed a liquid crystal film (6), the first substrate (2) essentially supporting colour filters (124) resistant to temperatures of at least 180°C and separated by black matrixes (126), a first transparent, passivating layer (128) deposited on the entire surface occupied by the filters and the black matrixes, thin film transistors (8, 9) formed on the first passivating layer facing the black matrixes so as to be protected from the ambient light, first, transparent, capacitor plates (10), formed on the first passivating layer facing the colour filters, each first plate being connected to a thin film transistor, electrode rows (14) and columns (12) for controlling said transistors and a second transparent, passivating layer (20) covering the transistors, the first plates, the rows and the columns, the second substrate (4) essentially having the second transparent capacitor plate (28), said second plates facing the first capacitor plates.

2. Structure according to claim 1, wherein the second substrate (4) has a continuous conductive plate (28) serving as a second capacitor plate.

3. Structure according to claim 1 or 2, wherein the transistors are of the "gate on top" type.

4. Structure according to any one of the claims 1 to 3, wherein the colour filters and black matrixes are formed in a pigment-containing, crosslinked polyimide layer.

5. Structure according to any one of the claims 1 to 4, wherein the first passivating layer is a chemical vapour deposited, amorphous, hydrogenated carbon layer.

6. Structure according to anyone of the claims 1 to 5, wherein the filters are in the form of blocks, each filter having a surface at the most equal to that of each capacitor plate.
